# EUROPEAN PATENT APPLICATION

(11) **EP 2 813 147 A1**
(43) Date of publication of application: **17.12.2014**
(21) Application number: 14171803.1
(22) Date of filing: 10.06.2014
(51) Int. Cl.: A23C 19/076, A23C 19/09

(54) **Cream cheese product**

(30) Priority: 14.06.2013 GB 201310641
(71) Applicant: Kraft Foods R & D, Inc., Deerfield, IL 60015 (US)
(72) Inventor: Reyes, Divinia, Delahey, Victoria 3037 (AU)
(74) Representative: Boult Wade Tennant

(57) **Abstract**

The present invention relates to a method for the manufacture of a cream cheese, the method comprising:
mixing cream cheese curds with milk protein and one or more stabilisers selected from gums and gelatine,
and cooking and/or homogenising the mixture to form a cream cheese,
wherein the cream cheese has a solids content of from 48 to 53wt% and a protein content of from 12 to 18wt%.

## Description

This disclosure relates to cream cheese and a method for the production thereof. The disclosure also relates to a relatively firm cream cheese product that can be grated and readily sliced.

Cream cheese is an acidic, cultured or direct acidified, uncured cheese made of dairy components including a fat source, preferably a mixture of cream and milk. Typically, in making cream cheese, a dairy food base (such as milk) is mixed with a fat source (such as cream) and followed by a pasteurization step. Before or after the pasteurization step, the cream cheese mix may be homogenized. After these steps, fermentation can be initiated by adding a bacteria culture to inoculate the mix with, for example, lactic acid producing cultures. The fermentation step can typically take place for at least about 10 hours and, in particular, about 1 to 2 days. Suitable cultures may comprise a lactic starter culture, selected from among mesophilic and thermophilic lactic acid producing bacteria, for instance. Typically, the fermentation process yields a final product that is preferable to consumers because of its "culture notes". Culture notes refer to the flavours and/or aromas associated with a fermented cream cheese product. An example of the manufacture of such cream cheeses is set out in EP2269466.

During the fermentation process, the milk becomes acidified to a point where the casein in the milk precipitates out. This coagulation produces curds, which eventually become the cream cheese, and whey, which is the liquid portion that contains water, lactose and other proteins. A separation step is employed to remove the moisture from the curd portion, thus at least partially separating the curds from the whey. The separation step typically comprises a centrifugation process, where the whey is separated from the curd and is removed from the process. When using this type of separation process, a loss of flavour can occur upon the removal of the whey phase from the curd phase. After the separation step, the mixture may be homogenized, resulting in the final cream cheese product.

As discussed in US7611743, after the whey has been reduced, stabilisers, salt and other ingredients may be added. The controlled removal of the whey allows for the selection of the desired water content in the final product.

It is an aim in the general manufacture of cream cheese products to achieve a product that is smooth and creamy. It is especially desired that a cream cheese product can be spread almost straight from the fridge. US7655267 discusses the desired texture for cream cheese products and notes that it is may be possible to slice a cream cheese straight from the fridge, but otherwise it smears and spreads easily, especially at room temperature.

A further aim in the manufacture of some cream cheese products has been to reduce the levels of fat present, while maintaining the body and texture characteristics typically associated with cream cheese. US 3,929,892 sets out to achieve this aim by heating cottage cheese curd and mixing it with non-fat milk solids and a fat source, such as cream cheese curd. The curd, fat source and/or non-fat milk solids provide caseins in combination with denatured serum proteins in an amount sufficient to provide the desired body and texture to the cheese product. After the mixture has been heated, low levels of gums may be added. The cheese product has the body and texture resembling that of cream cheese, and is easily spreadable.

Similarly, US 5,676,984 is directed to a fat-free cream cheese product, and teaches that high amounts of water soluble solids, e.g. lactose, in the product are desirable for promoting and enhancing the spreadability of fat-free cream cheese and for providing a texture which closely resembles traditional full fat cream cheese. US 5,676,984 also teaches that high amounts of casein are desirable in the product for producing a fat-free cream cheese product with a conventional cream cheese texture.

Accordingly, it is desirable to provide an alternative cream cheese product and/or tackle at least some of the problems associated with the prior art or, at least, to provide a commercially useful alternative thereto.

Accordingly, in a first aspect the present disclosure provides a method for the manufacture of a cream cheese, the method comprising:
mixing cream cheese curds with milk protein and one or more stabilisers selected from the group consisting of gums and gelatine,
and cooking and/or homogenising the mixture to form a cream cheese,
wherein the cream cheese has a solids content of from 48 to 53wt% and a protein content of from 12 to 18wt%.

The present disclosure will now be further described. In the following passages different aspects of the disclosure are defined in more detail. Each aspect so defined may be combined with any other aspect or aspects unless clearly indicated to the contrary. In particular, any feature indicated as being preferred or advantageous may be combined with any other feature or features indicated as being preferred or advantageous. It is intended that the features disclosed in relation to the product may be combined with those disclosed in relation to the method and vice versa.

Cream cheese is a well known material. It is a soft, mild-tasting cheese, often with a high fat content. Traditionally, it is made from unskimmed milk enriched with additional cream. Cream cheese is not naturally matured and is meant to be consumed fresh, unlike other soft cheeses. Cream cheese is often spread on bread, bagels, crackers, etc., and used as a dip for potato chips and similar snack items, and in salads.

Cream cheese block currently on the market has a soft texture that does not lend itself to mechanical shredding. The shredded product from this soft cream cheese will stick and forms into lumps. Such conventional soft cream cheese block is suitable for use as an ingredient in cheese cake making or other cooking and baking application that does not require shredding.

The cream cheese produced as described herein may have the same appearance (pale white or cream) and/or flavour (characteristic cultured) as the current commercial cream cheese block but is typically firm enough to be grated, sliced or mechanically processed into other shapes such as, for example, cubes, crumbles, strings and balls. This allows it to be used in other cooking/usage applications such as, for example, toppings for pizza or salads. The cream cheese advantageously forms separated shreds and/or slices that retain their shape when packaged. Moreover, the cream cheese provided in a desired shape (for example, slices or shreds) may advantageously retain, at least substantially, that shape on heating. Also, oil and/or fat leaching from the product on heating is preferably reduced.

The present inventors have realised that there is potential for a new cream cheese product having a hitherto unknown combination of flavour and texture. In particular, the cream cheese product described herein provides the cultured note flavour associated with cream cheeses, together with a firm consistency that permits slicing and grating at a temperature of from 4 to 10°C. Processing at room temperature (for example 18 to 25°C, typically approximately 20°C) is also possible. Moreover, the inventors have found cream cheese formulations that become soft and retain their shape when heated. This is in contrast to hard cheese formulations, which run out and with oil separation when heated. The inventors have found that this allows for the provision of new composite food products, such as pizzas with sliced cream cheese toppings.

The solids content is from 48 to 53wt% of the cream cheese. This means that 52 to 47% of the cream cheese is comprised of liquid, which is water or mainly water. The solids content includes protein, fat, sugars (lactose), gum, gelatine and the like. The total protein content is from 12 to 18wt% and this forms part of the solids content, some from added milk protein and some from the milk/cream that is used to form the cream cheese curds.

It is preferred that the cream cheese is produced in a block format which can be shredded and sliced using a mechanical shredding and slicing machine or formed into other shapes. In an alternative embodiment, the cream cheese may be provided as slices and/or shreds and may be packaged in this way for use by the end consumer.

The preparation of cream cheese curds is well known in the art. It is preferred that the cream cheese is not manufactured by a wheyless method. Preferably the curds are produced by fermentation and/or are derived from a mixture of milk and cream. The preparation of curds in the manufacture of cream cheese is well known: the curds are the solids that separate from the liquid component (the whey) on acidification of the milk/cream mixture.

The method includes the addition of milk protein. Milk protein is a standard commercial product. It has been found that the addition of this protein, in combination with gum and/or gelatine, helps to provide the improved firmer texture. Preferably the milk protein is added in an amount of from 6 to 15wt% based on the final cream cheese, more preferably from 8 to 12wt%.

The method includes the addition of one or more stabilisers selected from gums and gelatine. Preferably, the one or more stabilisers are selected from carrageenan, xanthan gum, sodium carboxymethyl cellulose, gelatine, sodium alginate, carob bean gum and mixtures of two or more thereof. Preferably, the one or more stabilisers are present in a total amount of from 1 to 5wt%, preferably 1.1 to 3.5wt%, more preferably 1.5 to 3wt%, based on the final cream cheese. These higher than normal levels of stabiliser help to provide the unique texture and functionality. Preferably the stabilisers contain two or more different gums/gelatine.

As will be appreciated, further stabilisers, such as salt and the like, can also be included in the cream cheese formulation.

The method involves a step of cooking and/or homogenising the mixture to form a cream cheese. The method may also include a step of sterilising or pasteurising the cream cheese or its ingredients, grating or slicing the product, or a step of adding additional ingredients or flavourings. These steps are conventional. Preferably the method further comprises a step of packaging the cream cheese, preferably in an air-tight container.

The cream cheese made according to the process has a solids content of from 48 to 53wt% and a protein content of from 12 to 18wt%. These characteristics help to ensure that the final product can be readily shredded and sliced at a temperature typically of from 4 to 10°C. Processing at room temperature (for example 18 to 25°C, typically approximately 20°C) is also possible.

The cream cheese can have additional flavourings added, such as pastes or powders or inclusions of actual food components. For example, tomato paste or pieces, herbs, chocolate pieces and the like.

According to a second aspect, there is provided a cream cheese obtainable according to the method disclosed herein. This product is unique in that it has a firmer than usual texture and can be grated or sliced, even at room temperature. Moreover, the cheese preferably has a characteristic cream cheese colour and/or flavour.

According to a third aspect, there is provided a cream cheese comprising one or more stabilisers selected from gums and gelatine, and having a solids content of from 48 to 53wt% and a protein content of from 12 to 18wt%.

The cream cheese described herein preferably has a Stevens hardness (measured at 6°C) of from 500 to 1000g, preferably from 650 to 950g. Conventional cream cheeses, so that they can be readily spread, have a Stevens hardness of less than 500g. Hardness measurements may be obtained in a conventional manner using a Stevens LFRA TA 1000 Texture Analyser and CNS Farnell LFRA TA 1000 computer interface kit.

Preferably the cream cheese has a fat content of 35wt% or less, more preferably a fat content of from 20-35wt%. It is known to use stabilisers to improve the texture of low-fat cream cheese products, although these do not have the firmness of the high protein cream cheese described herein. Instead, the stabilisers are used to compensate for the change in texture resulting from the reduction in the fat content.

Preferably the solids content is from 48 to 50wt%. This has been found to provide a consistently high quality product having the desired firmness.

The invention will now be described in relation to the following non-limiting figures, in which:
Figure 1 shows a flow chart of steps involved in a batch process of the method disclosed herein.
Figure 2 shows a flow chart of steps involved in a continuous process of the method disclosed herein.

The invention will now be described in relation to the following non-limiting examples.

### Examples

Cream cheese products were produced that can be grated or sliced using a laboratory mechanical shredder and slicer. The Cream Cheese can be manufactured in continuous process or in batch process and then pressed into a block format, which can then be converted to its other forms.

The following examples were produced in a batch process using the method and recipe discussed below. In brief, milk was cultured and the pre-separated cream cheese curd at 70°C was mixed with a blend of milk protein and stabilizers, which can be added continuously to the curd or mixed in an instantiser. The product was homogenized at 150Bar to provide a desirable smooth texture.

The hot product was filled in a 20kg bag and cooled to 4°C prior to testing.

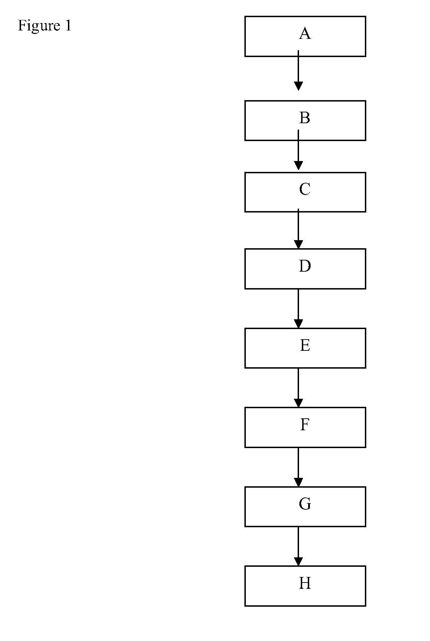

As shown in Figure 1, the batch process included the following steps:
A - Mixing water, gums and gelatine in an instantiser for 10 minutes to prehydrate the gums.
B - Adding cream cheese curd pre-heated to 70°C and mixing it with the hydrated gums for a further 2 minutes. This was mixed further in the instantiser with constant agitation and brief cutter use to ensure full mixing.
C - Adding milk protein and tricalcium phosphate (if present) and mixing for a further 5 minutes.
D - Standardising the mixture in the instantiser for 20 minutes to adjust to chemical targets and, if necessary, add additional water.
E - Cooking and holding the product for 2minutes at 76°C.
F - Homogenising the mixture for 30 seconds in a homogeniser at a total pressure of 150 Bar.
G - Filling the mixture into containers.
H - Cooling the mixture.

| | **Comp. Ex.** | **Example 1** | **Example 2** | **Example 3** | **Example 4** | **Example 5** | **Example 6** | **Example 7** | **Example 8** |
|---|---|---|---|---|---|---|---|---|---|
| **Ingredient** | | | | | | | | | |
| MILK, PASTEURIZED | 180.96 | 190.69 | 181.12 | 174.77 | 189.96 | 187.85 | 187.84 | 192.04 | 208.04 |
| CREAM (FROM MILK) | 43.17 | 45.49 | 43.21 | 41.7 | 45.32 | 44.81 | 44.81 | 45.81 | 49.63 |
| ANHYDROUS MILKFAT | 1.96 | 2.07 | 1.97 | 1.9 | 2.06 | 2.04 | 2.04 | 2.09 | 2.26 |
| LACTIC ACID | 2.2 | 2.07 | 1.96 | 1.89 | 2.06 | 2.04 | 2.04 | 2.09 | 2.65 |
| SODIUM CHLORIDE | 1.94 | 1.97 | 2.03 | 2 | 1.79 | 0.6 | 0.6 | 0.61 | 1.0 |
| CAROB BEAN GUM | 0.65 | 0.66 | 0.65 | 0.65 | 0.66 | 0.45 | 0.45 | 0.45 | 0.45 |
| STARTER CULTURE | 0.05 | 0.05 | 0.05 | 0.04 | 0.05 | 0.05 | 0.05 | 0.05 | 0.05 |
| WATER | 13.68 | 7.75 | 7.25 | 7.15 | 7.74 | 7.25 | 7.06 | 6.06 | 7.00 |
| LACTOSE | -1.96 | -2.07 | -1.96 | -1.89 | -2.06 | -2.04 | -2.04 | -2.08 | -2.25 |
| NEGATIVE WHEY FOR PROCESSING | -149.99 | -158.06 | -150.12 | -144.87 | -157.45 | -155.7 | -155.7 | -159.18 | -180.39 |
| SORBIC ACID | 0.09 | 0.09 | 0.09 | 0.09 | 0.09 | 0.09 | 0.09 | 0.09 | 0.06 |
| MILK PROTEIN CONCENTRATE | 6 | 7.72 | 12.2 | 15 | 7.72 | 11.5 | 11 | 8.08 | 7.0 |
| WHEY PROTEIN CONCENTRATE | | | | | | | 1 | 1.02 | 2.0 |
| CARRAGEENAN | 0.23 | 0.23 | 0.23 | 0.23 | 0.45 | 0.23 | 0.23 | 0.18 | 0.23 |
| SUCROSE SOLUTION | 0.03 | 0.03 | 0.03 | 0.03 | 0.05 | 0.03 | 0.03 | 0.02 | 0.03 |
| XANTHAN GUM | 0.25 | 0.25 | 0.25 | 0.25 | 0.51 | 0.25 | 0.25 | 0.25 | 0.25 |
| SODIUM CARBOXYMETHYL CELLULOSE | | | | | | | | 0.4 | |
| GELATIN | | 0.31 | 0.31 | 0.31 | 0.3 | 0.3 | | 2.02 | 2.0 |
| SODIUM ALGINATE | 0.25 | 0.25 | 0.25 | 0.25 | 0.25 | 0.25 | 0.25 | | |
| TRICALCIUM ORTHOPHOSPHATE | 0.5 | 0.5 | 0.5 | 0.5 | 0.5 | | | | |
| Total | 100 | 100 | 100 | 100 | 100 | 100 | 100 | 100 | |
| | | | | | | | | | |

| **Chemical Composition** | | | | | | | | | |
|---|---|---|---|---|---|---|---|---|---|
| % Solids | 44.76 | 48.35 | 50.77 | 52.15 | 48.48 | 49 | 49.55 | 49.49 | 52.1 |
| % Fat | 26.52 | 27.96 | 26.64 | 25.76 | 27.87 | 27.68 | 27.64 | 28.2 | 29.60 |
| % Protein | 10.6 | 12.58 | 15.92 | 18 | 12.56 | 15.55 | 15.38 | 14.92 | 15.48 |
| % Lactose | 2.03 | 2.21 | 2.32 | 2.39 | 2.2 | 2.36 | 2.33 | 2.24 | |
| % Casein | | | | | | | | | 10.54 |
| | Too Soft | | | | | | | | |

**Properties of the examples**

| **Sample** | **Hardness (g)** | **Tackiness (g)** | **Adhesiveness (gs)** | **Rigidity (g/s)** | **Comments** |
|---|---|---|---|---|---|
| Example 1 | 812 | -94.5 | -54.5 | 236.8 | Feels firm to cut into, but doesn't hold shape. Doesn't grate well either. Has a salty taste. |
| Example 2 | 717.5 | -111 | -63.9 | 210.6 | Cuts through really nicely, spongy texture. Grates easily and nicely. Tastes salty. |
| Example 3 | 786.5 | -131 | -70 | 239 | |
| Example 4 | 925 | -12 | -1.8 | 302 | Good firm texture and taste. Very hard to cut into, however the product is difficult to cube. |
| Example 5 | 655 | -60 | -31.6 | 192.8 | Good Cream Cheese flavour, Firm, Shreds holds shapes |
| Example 6 | 861 | -85 | -47.4 | 253.8 | Good Clean slice, shred retains shapes and does not stick, flavour is creamy and melts slowly in the mouth |
| Example 7 | 939 | -104 | -58.1 | 278.4 | Firm texture, dry surface and shred retains shapes and does not stick together. |
| Example 8 | 779 | -145 | -152 | 234 | |

The hardness (g) (measured at 6°C) is the peak postive load attained in a full cycle. Force required to attain a given deformation. The adhesive force (g) is the peak negative load attained in a full cycle. Force required to pull the probe from the sample, and is representative of tackiness. The total positive area (gs) is the work required to attain deformation, and is indicative of the internal strength of bonds within sample and therefore representative of consistency/spreadability. The total negative area (gs) is the work required to overcome attractive forces between sample surface and probe, and is representative of adhesiveness. The modulus (g/s) is the ratio of sample stress versus strain during the compression cycle, slope of force vs. deformation curve within the linear region, and is representative of rigidity.

The measurements (at 6°C) were conducted using a Stevens LFRA TA 1000 Texture Analyser and CNS Farnell LFRA TA 1000 computer interface kit. The Stevens LFRA Texture analyser consists of a bi-directional load cell and probe that are driven by a stepping motor, to enable linear travel. A probe of known geometry, compresses/penetrates the sample material at a pre-selected speed and distance. The Stevens records the force resisting the probe movement and generates a force-deformation curve, from which required information may be derived in a conventional manner. The following testing probes were used: testing probe TA33 (3mm stainless steel ball); testing probe TA8 (6.35mm stainless steel ball); and testing probe TA18 (12.7mm stainless steel ball). The choice of probe is dependent on the hardness of the sample being tested. Generally, commence with probe TA8, but if max force is exceeded (1000g) use probe TA33. If low value for hardness is obtained (<100), then use probe TA18.

Determinations are preferably performed in duplicate with a relative difference of ≤ 10% with respect to hardness.

Further physical testing was carried out on Example 8 in order to determine its viscosity profile and texture as a function of temperature.

### Viscosity Testing

A 500g block of Example 8 together with a 500g block of Philadelphia ® cheese as a reference were prepared using a Thermomix ® device. This involved blending the ingredients and heating to 50 °C to hydrate the powders and functionalise the gums. 30g of the heated product was then transferred into a Rapid Visco Analyser (RVA) canister. The following test profile was used:

| | |
|---|---|
| Starting temperature | 50 °C |
| Temperature Profile | 80 to 50 °C in 3 hours |
| End Temperature | 50 °C |
| Speed | 50 rpm |

It was found that the viscosity of Example 8 was greater than the viscosity of the reference sample at all temperatures. In particular, the viscosity of Example 8 at 80 °C was six times that of the reference sample. The viscosity at 68 °C was three times that of the reference sample.

As the temperature was lowered from 55 to 50 °C, anotable difference in behaviour could be seen between Example 8 and the reference sample. Within this temperature range, the viscosity of the reference sample increased. By contrast, the viscosity of Example 8 was at a maximum at 55 °C and simply remained steady as the temperature was lowered to 50 °C. This is thought to be due to the fact that the viscosity measurements were taken during the agitation of the sample. The observed behaviour of Example 8, namely a thinning during agitation, is thought to be due to the shear thinning property (pseudoplasticity) of the xantham gum and carrageenan gum used in the product. A more complete data set for the variation of viscosity with the temperature of the samples is shown in the table below.

| **Time (min)** | **Temperature (ºC)** | **Example 8 Viscosity (cP)** | **Reference Philadelphia ® Viscosity (cP)** |
|---|---|---|---|
| 20 | 80 | 8846 | 3402 |
| 40 | 80 | 7542 | 2722 |
| 60 | 80 | 7088 | 1758 |
| 80 | 76 | 7259 | 1077 |
| 110 | 70 | 7485 | 2211 |
| 140 | 60 | 6691 | 2495 |
| 160 | 55 | 8733 | 3799 |
| 180 | 50 | 8506 | 4480 |

These observations were supported by a plant scale analysis of a cooked blend using a Brookfield Viscometer. During this testing, samples of the cooked blend were placed into a Thermomix ®. The Thermomix ® was set in a gentle stir (approximately 40 rpm as per equipment specifications), and the temperature was set to 67 °C and then allowed to cool down to 40 °C. The viscosity was taken every30 minutes using a Brookfield Viscometer using the following settings:
a. Spindle: No. 7
b. Speed: 20 rpm
c. Time: 30 seconds (before reading is taken)

The results are shown in the table below:

| **Time** | **Viscosity (cP)** | **Temp (°C)** |
|---|---|---|
| 11:50 | 112000 | 67 |
| 12:20 | 103000 | 65 |
| 12:50 | 117000 | 60 |
| 13:20 | 139000 | 60 |
| 15:10 | 109000 | 40 |

As can be seen from the table, the viscosity remained relatively constant as the temperature decreased. Again, this can be explained by the shear thinning property (or pseudoplasticity) of the xanthan and carrageenan gums used in the product.

A further comparison was made between a homogenised and non-homogenised product at 67 °C:

| | **Viscosity (cP)** |
|---|---|
| Homogenised | 112000 |
| Non-Homogenised | 80000 |

As can be seen from the table, the viscosity of the homogenised blend is notably lower than the non-homogenised blend, since only upon homogenisation does the shear thinning property of the gums have a significant effect on the blend as a whole.

It is important to factor in the impact the gums have on measured viscosity as it is not possible to test the viscosity of the product without slow agitation.

### Texture evaluation

A sample of Example 8 was cut into chunks, placed into a Thermomix ® and reheated to 70 °C with slow agitation. The same steps were carried out on a reference sample of Philadelphia ® cheese. This test was designed to determine the melting and softening properties of the respective samples.

The chunks of Example 8 were reheated from ambient temperature and slowly agitated, softening having occurred by 45°C. The chunks started to form a more uniform mass at this temperature. At 54 °C, the product had clearly softened and could be scooped out in a similar manner to the reference sample. Upon standing, a thin film formed on the surface of the cheese. Upon further heating and mild agitation, this film was incorporated back into the bulk product.

The texture measurement of the product was also carried out without agitation. A portion was cut from the block, reheated, and tempered in a hot cabinet maintained at a constant temperature. The texture was measured using a Stevens Texture Analyser with the following test parameters:
i. Probe - TA 06 (metal ball probe)
ii. Penetration -6mm
iii. Speed - 2mm/sec

Further experimental details are analogous to those given previously.

The data obtained is shown in the table below:

| **Product Temperature** | **Firmness Hardness (g)** | **Tackiness (g)** | **Spreadability** | **Adhesiveness (gs)** | **Rigidity (g/s)** |
|---|---|---|---|---|---|
| Reference sample (5°C) | 302 | -145 | 715.9 | -171.1 | 87.6 |
| Example 8 (5°C) | 712 | -64 | 1655 | -20.1 | 214.3 |
| Example 8 (24 °C) | 240 | -24 | 530.8 | -165 | 68.8 |
| Reference sample (27.7 °C) | 42 | -23 | 110.3 | -28.7 | 11 |
| Example 8 (47 °C) | 81 | -22 | 204.5 | -16.5 | 21.3 |

As can be seen from the table, the texture of Example 8 at 24 °C is similar to that of the reference sample at 5 °C. Moreover, the texture of Example 8 at 47 °C is firmer than that of the reference sample at 27.7 °C.
As demonstrated by the above data, the inventive formulation constitutes a cream cheese product possessing the mouthfeel and cultured flavour associated with cream cheeses, while having a firm consistency that permits slicing.

Some of these examples were prepared according to a continuous process as described below. The products were found to have the same form and characteristics.

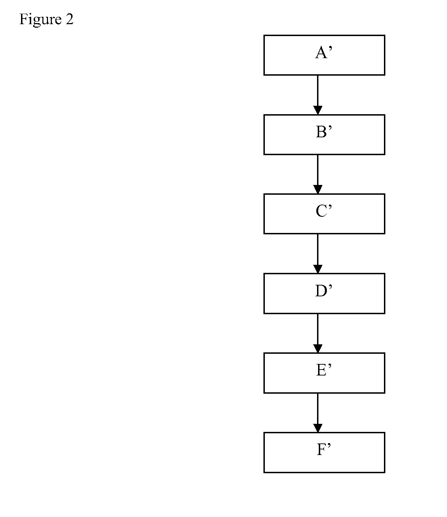

In a continuous process, as shown in Figure 2, the steps are as follows:
A' - Adding cream cheese curd, salt and gum mix, milk protein and gelatine slurry to the hopper of a continuous line. The cream cheese curd and salt-gum blend flow into the hopper at the correct ratio through inline static mixer. Temperature 78-82 °C
B' - Storing the mixture in a holding tank. The cream cheese curd is kept at 72-76°C with constant agitation and brief cutter use to ensure full mixing.
C' - Pumping the mixture past a static mixer to a homogeniser.
D' - Homogenising the mixture and functionalise gums at a total pressure of 150 Bar.
E' - Filling the mixture into containers.
F' - Cooling the mixture.

Although preferred embodiments of the invention have been described herein in detail, it will be understood by those skilled in the art that variations may be made thereto without departing from the scope of the invention or of the appended claims.

## Claims

1. A method for the manufacture of a cream cheese, the method comprising:
mixing cream cheese curds with milk protein and one or more stabilisers selected from gums and gelatine,
and cooking and/or homogenising the mixture to form a cream cheese,
wherein the cream cheese has a solids content of from 48 to 53wt% and a protein content of from 12 to 18wt%.

2. The method according to claim 1, wherein the milk protein is added in an amount of from 6 to 15wt% based on the final cream cheese.

3. The method according to claim 1 or claim 2, wherein the one or more stabilisers are selected from carrageenan, xanthan gum, sodium carboxymethyl cellulose, gelatine, sodium alginate, carob bean gum and mixtures of two or more thereof.

4. The method according to any of the preceding claims, wherein the one or more stabilisers are present in a total amount of from 1 to 5wt%, preferably 1.5 to 3wt%, based on the final cream cheese.

5. The method according to any of the preceding claims, further comprising packaging the cream cheese.

6. A cream cheese obtainable by the method of any of the preceding claims.

7. A cream cheese comprising one or more stabilisers selected from the group consisting of gums and gelatine, and having a solids content of from 48-53wt% and a protein content of from 12 to 18wt%.

8. The cream cheese according to claim 7, having a Stevens hardness (measured at 6°C) of from 500 to 1000g, preferably from 650 to 950g.

9. The cream cheese according to claim 7 or claim 8, having a fat content of 35wt% or less.

10. The cream cheese according to any of claims 7 to 9, having a fat content of from 20 to 35wt%.

11. The cream cheese according to any of claims 7 to 10, having a solids content of from 48 to 50wt%.

12. The cream cheese according to any of claims 7 to 11, further comprising one or more flavouring ingredients.
